(19) Europäisches Patentamt

European Patent Office

Office européen des brevets

(11) Veröffentlichungsnummer: **0 350 963**
**A2**

(12) **EUROPÄISCHE PATENTANMELDUNG**

(21) Anmeldenummer: **89112991.8**

(22) Anmeldetag: **14.07.89**

(51) Int. Cl.⁴: **B01D 53/34**

(30) Priorität: **14.07.88 DE 3823848**

(43) Veröffentlichungstag der Anmeldung:
**17.01.90 Patentblatt 90/03**

(84) Benannte Vertragsstaaten:
**AT BE CH DE ES FR GB IT LI NL SE**

(71) Anmelder: **SKW TROSTBERG
AKTIENGESELLSCHAFT
Dr.-Albert-Frank-Strasse 32
D-8223 Trostberg(DE)**

(72) Erfinder: **Der Erfinder hat auf seine Nennung
verzichtet**

(74) Vertreter: **Huber, Bernhard, Dipl.-Chem. et al
Möhlstrasse 22 Postfach 860 820
D-8000 München 86(DE)**

(54) Verfahren zur Reduzierung von SO2- und/oder NOX-Emissionen bei Verbrennungsprozessen.

㊗ Es wird ein Verfahren zur Reduzierung von $SO_2$- und/oder $NO_x$-Emissionen bei Verbrennungsprozessen beschrieben, wobei man als Additiv hydratisierten Kalkstickstoff einsetzt. Mit Hilfe des erfindungsgemäßen Additivs lassen sich Entstickungsgrade von 40 bis 50 % und Entschwefelungsgrade von 70 bis 80 % erzielen.

EP 0 350 963 A2

## Verfahren zur Reduzierung von SO$_2$- und/oder NO$_X$-Emissionen bei Verbrennungsprozessen

Die vorliegende Erfindung betrifft ein Verfahren zur Reduzierung von SO$_2$- und/oder NO$_X$-Emissionen bei Verbrennungsprozessen.

Es ist bekannt, daß sich die bei der Verbrennung von fossilen Energieträgern entstehenden Schwefel- und Stickoxidemissionen durch Zugabe bestimmter Additive beträchtlich senken lassen.

Bei der Entstickung von Rauchgasen haben sich hierbei in der Technik vor allem katalytische Verfahren bewährt, die aufgrund ihres großen Platzbedarfs der Katalysatormassen aber gewisse technische Probleme aufwerfen. Als Alternative wurden deshalb die nichtkatalytischen Stickoxid-Reduktions-Verfahren entwickelt, wobei vor allem Ammoniak aufgrund seiner selektiven Wirkung Eingang in die Technik gefunden hat. Nachteilig beim Einsatz des Ammoniaks ist seine schwierige Handhabung verbunden mit besonderen Sicherheitsvorkehrungen, weshalb dieses Verfahren einen großen technischen Aufwand erfordert.

Zur Reduzierung der SO$_2$-Emissionen beispielsweise aus Kraftwerkskesseln werden in der Technik bekanntermaßen Erdalkali-Metalloxide verwendet, die entweder direkt zugesetzt oder während der Abgasbehandlung aus Hydroxiden oder Carbonaten gebildet werden. Die Art der Zugabe variiert bei den einzelnen Kalkadditivverfahren, wobei die Zugabe des Additivs in trockener oder feuchter Form erfolgen kann.

Ein Nachteil aller dieser Verfahren ist die Tatsache, daß die Entschwefelung und Entstickung der Abgase getrennt, d. h. in mehreren Stufen vorgenommen werden muß.

Es sind bisher nur wenige Verfahren bekannt geworden, bei denen durch Zugabe eines Additivs gleichzeitig eine Verminderung der SO$_2$- und NO$_X$-Emissionen aus Verbrennungsprozessen erreicht werden kann.

So wird in der DE-OS 34 47 616 ein Verfahren beschrieben, gemäß dem Calcium enthaltende Verbindungen, wie beispielsweise Calciumcarbonat, Calciumoxid, Calciumcarbid und Diamidkalk im Gemisch mit Kalkstickstoff als Trockenadditiv gleichzeitig zur Entschwefelung und Entstickung der Rauchgase eingesetzt werden. Technischer Kalkstickstoff ist ein sehr hartes und grobkörniges Material, das sich nur durch aufwendiges Mahlen pulverisieren läßt und das sich verhältnismäßig reaktionsträge verhält. Dies ist vor allem beim Einsatz als Trockenadditiv problematisch, wo eine relativ hohe Reaktionsgeschwindigkeit erforderlich ist.

Der vorliegenden Erfindung lag daher die Aufgabe zugrunde, ein Verfahren zur Reduzierung von SO$_2$- und/oder NO$_X$-Emissionen bei Verbrennungsprozessen zu entwickeln, welches die genannten Nachteile des Standes der Technik nicht aufweist, sondern es mit geringem technischen Aufwand ermöglicht, eine wirkungsvolle Reduzierung von SO$_2$- und NO$_X$-Emissionen in einer Stufe vorzunehmen.

Diese Aufgabe wurde erfindungsgemäß dadurch gelöst, daß man als Additiv hydratisierten Kalkstickstoff einsetzt. Es hat sich nämlich überraschenderweise gezeigt, daß Kalkstickstoff in hydratisierter Form gegenüber sauren Schadstoffen aus Verbrennungsvorgängen eine besonders hohe Reaktivität besitzt und daß man mit vergleichsweise geringen Mengen an Additiv auskommt.

Beim Verfahren entsprechend der vorliegenden Erfindung wird als Additiv hydratisierter Kalkstickstoff verwendet, der in technisch einfacher und bekannter Weise durch Umsetzung von technischem Kalkstickstoff mit einer annähernd äquivalenten Menge an Wasser bei Raumtemperatur oder erhöhter Temperatur hergestellt wurde. Vorzugsweise wird der hydratisierte Kalkstickstoff durch Behandlung mit Wasserdampf bei Temperaturen bis 400 $^\circ$C hergestellt.

Der hydratisierte Kalkstickstoff, der bevorzugt aus 40 bis 50 Gew.-% Calciumcyanamid, 15 bis 25 Gew.-% Calciumhydroxid, 10 bis 12 Gew.-% Kohlenstoff sowie 1 bis 10 Gew.-% Calciumcarbonat besteht, liegt dabei als amorphes, weiches und äußerst feinkörniges Produkt vor, das sich außerdem durch eine besonders gute Rieselfähigkeit auszeichnet. Die Teilchengröße des hydratisierten Kalkstickstoffs beträgt vorzugsweise für 90 % der Teilchen <160 μm.

Im Rahmen der vorliegenden Erfindung ist es möglich, dem Additiv zusätzlich bis zu 50 Gew.-% einer reaktiven Calciumverbindung bezogen auf den Gehalt an hydratisiertem Kalkstickstoff zuzusetzen. Als reaktive Calciumverbindungen sind solche Verbindungen zu verstehen, die aufgrund ihrer Reaktivität SO$_2$- und/oder NO$_X$-Gase binden können. Hierbei haben sich vor allem Verbindungen wie Calciumcarbonat, Calciumhydroxid und Calciumoxid bewährt. Calciumcarbonat kann hierbei sowohl als synthetisches Produkt oder in Form von Kalkstein verwendet werden. Es kommt hierbei weniger auf die Modifikation als vielmehr auf die Feinteiligkeit der jeweiligen Komponente an. Als besonders vorteilhaft haben sich hierbei insbesondere Schwarzkalke erwiesen, die im wesentlichen aus Calciumcarbonat und Kohlenstoff bestehen und bei der großtechnischen Herstellung von Cyanamidderivaten als Nebenprodukte anfallen.

Ein typischer Schwarzkalk ist hierbei Diamidkalk, der aus ca. 70 bis 85 Gew.-% sehr feinem, gefälltem Calciumcarbonat und 8 bis 12 Gew.-% Kohlenstoff in Graphitform besteht und noch geringfügige oxidische Verunreinigungen enthält. Ähnlich gute Ergebnisse wie mit Diamidkalk lassen sich mit Kalkhydrat erzielen, welches durch Hydratisierung von gebranntem Kalk (CaO) ebenfalls in sehr feinteiliger Form anfällt. Erfindungsgemäß wird daher bevorzugt ein Gemisch von reaktiven Calciumverbindungen mit hydratisiertem Kalkstickstoff für den erfindungsgemäßen Zweck verwendet.

Diese Calciumverbindungen verstärken insbesondere den entschwefelnden Effekt des hydratisierten Kalkstickstoffs und finden deshalb vorzugsweise bei solchen Verbrennungsvorgängen Anwendung, bei denen die $SO_2$-Emission besonders groß ist.

Das erfindungsgemäß vorgeschlagene Verfahren ist vor allem im Temperaturbereich von 800 bis 1200°C wirksam und kann somit bei praktisch allen Verbrennungsanlagen, insbesondere bei Kraftwerkskesseln, problemlos angewendet werden.

Die Zugabe des Additivs ist ebenfalls unproblematisch, denn es kann aufgrund seiner Feinteiligkeit und Rieselfähigkeit als Trockenadditiv sehr einfach mit Hilfe eines Trägergases in die Brennkammer ggf. mit dem Brennstoff oder in die jeweiligen Brennerebenen eingeblasen werden. Als Trägergas kommen hierbei die Verbrennungsluft oder sonstige Gase in Frage, die sich inert verhalten und keine unerwünschten Nebenreaktionen eingehen. In einer bevorzugten Ausführungsform wird als Trägergas Wasserdampf herangezogen, welches zusammen mit dem Additiv in den Verbrennungsprozeß eingeblasen wird.

Es hat sich hierbei gezeigt, daß mit Hilfe des Wasserdampfes eine weitere Aktivierung des hydratisierten Kalkstickstoffs stattfindet, so daß eine besonders hohe Schadstoffreduzierung erreicht werden kann. Ein ähnlich guter Effekt läßt sich erzielen, wenn man das Additiv in Form einer wäßrigen Suspension vorzugsweise in die heißen Verbrennungsabgase mit Hilfe der üblichen Düsen einsprüht. Auch auf diese Weise findet durch das verdampfende Wasser eine besondere Aktivierung des Additivs statt. Entscheidend ist hierbei, für eine möglichst feinteilige Verdüsung der Tröpfchen und eine gleichmäßige Verteilung des Additivs im Abgasstrom zu sorgen, was mit den üblichen technischen Vorrichtungen problemlos bewerkstelligt werden kann.

Die zur Reduzierung der Schwefel- und Stickoxidemissionen erforderliche Menge an Additiv richtet sich im wesentlichen nach den Schadstoffkonzentrationen im Brennstoff und kann folglich in weiten Grenzen variiert werden. Bei den üblichen Verbrennungsanlagen, insbesondere Kraftwerken, welche je nach Leistung, Brennstoff und Betriebsbedingungen zwischen 200 und 1300 mg $NO_X$ sowie zwischen 2000 und 5000 mg $SO_2$ pro $Nm^3$ emittieren, sind normalerweise 10 bis 100 kg Additiv pro t Brennstoff erforderlich, um Entstickungsgrade von 40 bis 50 % und Entschwefelungsgrade von 70 bis 80 % zu erreichen. Aufgrund der kostengünstigen Additive, die im großtechnischen Maßstab verfügbar sind, sowie aufgrund des geringen technischen Aufwandes eignet sich das erfindungsgemäße Verfahren in hervorragender Weise für den großtechnischen Betrieb.

Die nachfolgenden Beispiele sollen die Erfindung näher erläutern, ohne sie jedoch darauf zu beschränken.

Beispiel 1

In einem braunkohlebefeuerten Kraftwerk mit 80 MW Leistung werden stündlich ca. 35 t Braunkohle verbrannt, wobei eine Rauchgasmenge von 290 000 $Nm^3/h$ entsteht. Der Sauerstoffgehalt im Abgas beträgt ca. 3 %, der $NO_X$-Gehalt 950 $mg/Nm^3$ und der $SO_2$-Gehalt 2100 $mg/Nm^3$.

Hydratisierter Kalkstickstoff (Teilchengröße 90 % < 160 μm) wird in einer Menge von ca. 2500 kg/h mit der Sekundärluft in das Rauchgas eingeblasen (Feuerraumtemperatur ca. 1000°C). Hierbei wird der $NO_X$-Gehalt auf 460 $mg/Nm^3$ und der $SO_2$-Gehalt auf 620 $mg/Nm^3$ im Abgas reduziert, was einem Entstickungsgrad von ca. 50 % und einem Entschwefelungsgrad von ca. 70 % entspricht.

Beispiel 2

In einem Kraftwerk mit 130 MW Leistung werden 45 t/h Steinkohle verbrannt, wobei eine Rauchgasmenge von 300 000 $Nm^3/h$ entsteht. Der Sauerstoffgehalt im Abgas beträgt ca. 6 %, der $NO_X$-Gehalt 1250 $mg/Nm^3$ und der $SO_2$-Gehalt 2400 $mg/Nm^3$.

Mit der Sekundärluft wird hydratisierter Kalkstickstoff (Teilchengröße 90 % < 160 μm) in einer Menge von ca. 3200 kg/h in das Rauchgas eingeblasen (Feuerraumtemperatur ca. 1200°C). Hierbei wird der $NO_X$-Gehalt im Abgas auf 650 $mg/Nm^3$ und der $SO_2$-Gehalt auf 750 $mg/Nm^3$ reduziert, was einem Entstickungsgrad von ca. 48 % und einem Entschwefelungsgrad von ca. 77 % entspricht.

**Ansprüche**

1. Verfahren zur Reduzierung von $SO_2$- und/oder $NO_X$-Emissionen bei Verbrennungsprozessen, dadurch gekennzeichnet, daß man als Additiv hydratisierten Kalkstickstoff einsetzt.

2. Verfahren nach Anspruch 1, dadurch gekennzeichnet, daß der hydratisierte Kalkstickstoff aus 40 bis 50 Gew.-% Calciumcyanamid, 15 bis 25 Gew.-% Calciumhydroxid, 10 bis 12 Gew.-% Kohlenstoff sowie 1 bis 10 Gew.-% Calciumcarbonat besteht.

3. Verfahren nach den Ansprüchen 1 und 2, dadurch gekennzeichnet, daß das Additiv eine solche Teilchengröße besitzt, daß 90 % der Teilchen <160 μm sind.

4. Verfahren nach den Ansprüchen 1 bis 3, dadurch gekennzeichnet, daß das Additiv zusätzlich bis zu 50 Gew.-% einer reaktiven Calciumverbindung bezogen auf den Gehalt an hydratisiertem Kalkstickstoff enthält.

5. Verfahren nach den Ansprüchen 1 bis 4, dadurch gekennzeichnet, daß man als reaktive Calciumkomponente Diamidkalk einsetzt.

6. Verfahren nach den Ansprüchen 1 bis 4, dadurch gekennzeichnet, daß man als reaktive Calciumverbindung Kalkhydrat verwendet.

7. Verfahren nach den Ansprüchen 1 bis 6, dadurch gekennzeichnet, daß man das Additiv in einem Temperaturbereich von 800 bis 1200 °C einsetzt.

8. Verfahren nach den Ansprüchen 1 bis 7, dadurch gekennzeichnet, daß man das Additiv mit Hilfe eines Trägergases in den Verbrennungsprozeß einbläst.

9. Verfahren nach Anspruch 8, dadurch gekennzeichnet, daß man als Trägergas die Verbrennungsluft heranzieht.

10. Verfahren nach Anspruch 8, dadurch gekennzeichnet, daß man als Trägergas Wasserdampf einsetzt.

11. Verfahren nach den Ansprüchen 1 bis 10, dadurch gekennzeichnet, daß man das Additiv in Form einer wäßrigen Suspension in die heißen Abgase eindüst.

12. Verfahren nach den Ansprüchen 1 bis 11, dadurch gekennzeichnet, daß man das Additiv in einer Menge von 10 bis 100 kg pro Tonne Brennstoff verwendet.